# EUROPEAN PATENT APPLICATION

(11) **EP 3 742 299 A1**
(43) Date of publication of application: **25.11.2020**
(21) Application number: 18901311.3
(22) Date of filing: 15.11.2018
(51) Int. Cl.: G06F 13/00, G06F 21/31, G06Q 20/40

(54) **INFORMATION PROCESSING DEVICE, INFORMATION PROCESSING METHOD, USER TERMINAL, SERVICE PROVISION DEVICE, AND SERVICE PROVISION METHOD**

(30) Priority: 18.01.2018 JP 2018006146
(71) Applicant: FeliCa Networks, Inc., Tokyo 141-0032 (JP)
(72) Inventor: SEKIYA, Shuichi, Tokyo 141-0032 (JP)
(74) Representative: Witte, Weller & Partner Patentanwälte mbB
(86) International application number: PCT/JP2018/042314
(87) International publication number: WO 2019/142477

(57) **Abstract**

For a system that provides services to users, it is desirable to provide a technique capable of improving the flexibility of the system while securing the validity of a value and the validity of a user accessing the value.

Provided is an information processing device including: an information acquisition unit that acquires, in a case where information indicating that card authentication corresponding to a user terminal has succeeded is acquired, an activation state of a service management application on the user terminal; and an information providing unit that provides the activation state to a service providing device that provides a service to the user terminal.

## Description

### TECHNICAL FIELD

The present disclosure relates to an information processing device, an information processing method, a user terminal, a service providing device, and a service providing method.

### BACKGROUND ART

In recent years, various systems for providing various services to users have been known. Values are used for providing services to users. A value is information necessary for providing a service to a user. For example, in a case where a credit card is used as a card, a credit number may correspond to a value. Alternatively, in a case where a prepaid card is used as a card, a remaining amount that can be paid (balance) may correspond to a value.

Preferably, a service is provided to a user after the validity of a value is secured and the validity of the user accessing the value is secured. The validity of a value may be secured by successful card authentication (for example, authentication with a card ID read from the card). On the other hand, the validity of the user accessing the value may be secured by successful user authentication (for example, authentication with a password, authentication with biometric information, or the like).

For example, a technique for performing user authentication using a password and fingerprint information recorded on a card, separately from card authentication, is disclosed (see, for example, Patent Document 1). According to this technique, in a case where a purchase amount and a password are input by a user and the purchase amount is lower than a set value, a settlement is made if the input password matches the password recorded on the IC card. On the other hand, in this technique, in a case where the purchase amount is higher than the set value, the user's fingerprint information is read, and a settlement is made if the read fingerprint information matches the fingerprint information recorded on the IC card.

### CITATION LIST

### PATENT DOCUMENT

Patent Document 1: Japanese Patent Application Laid-Open No. 2000-215279

### SUMMARY OF THE INVENTION

### PROBLEMS TO BE SOLVED BY THE INVENTION

However, in a case where the configuration used for card authentication is in common with the configuration used for user authentication in part or in whole, it may be difficult to improve the flexibility of the system. Therefore, for a system that provides services to users, it is desirable to provide a technique capable of improving the flexibility of the system while securing the validity of a value and the validity of a user accessing the value.

### SOLUTIONS TO PROBLEMS

According to the present disclosure, there is provided an information processing device including: an information acquisition unit that acquires, in a case where information indicating that card authentication corresponding to a user terminal has succeeded is acquired, an activation state of a service management application on the user terminal; and an information providing unit that provides the activation state to a service providing device that provides a service to the user terminal.

According to the present disclosure, there is provided an information processing method including: acquiring, in a case where information indicating that card authentication corresponding to a user terminal has succeeded is acquired, an activation state of a service management application on the user terminal; and providing the activation state to a service providing device that provides a service to the user terminal by a processor.

According to the present disclosure, there is provided a user terminal including: a request acquisition unit that acquires, in a case where information indicating that card authentication corresponding to the user terminal has succeeded is acquired by an information processing device, a request for transmission of an activation state of a service management application from the information processing device; and a response providing unit that provides the activation state, as a response to the request for transmission, to the information processing device.

According to the present disclosure, there is provided an information processing method including: acquiring, in a case where information indicating that card authentication corresponding to a user terminal has succeeded is acquired by an information processing device, a request for transmission of an activation state of a service management application from the information processing device; and providing the activation state, as a response to the request for transmission, to the information processing device.

According to the present disclosure, there is provided a service providing device including: a state acquisition unit that acquires, in a case where information indicating that card authentication corresponding to a user terminal has succeeded is acquired by an information processing device, an activation state of a service management application on the user terminal from the information processing device; and a service providing unit that provides a service in accordance with the activation state to the user terminal.

According to the present disclosure, there is provided a service providing method including: acquiring, in a case where information indicating that card authentication corresponding to a user terminal has succeeded is acquired by an information processing device, an activation state of a service management application on the user terminal from the information processing device; and providing a service in accordance with the activation state to the user terminal by a processor.

### EFFECTS OF THE INVENTION

As described above, according to the present disclosure, for a system that provides services to users, there is provided a technique capable of improving the flexibility of the system while securing the validity of a value and the validity of a user accessing the value. Note that the effects described above are not necessarily limited, and any of the effects shown in the description or other effects that may be recognized from the description may be provided in addition to, or in place of, the effects described above.

### BRIEF DESCRIPTION OF DRAWINGS

Fig. 1 is a diagram illustrating an example configuration of an information processing system according to an embodiment of the present disclosure.
Fig. 2 is a diagram illustrating an example functional configuration of a user terminal.
Fig. 3 is a diagram illustrating an example functional configuration of an authentication server.
Fig. 4 is a diagram illustrating an example functional configuration of a management server.
Fig. 5 is a diagram illustrating an example functional configuration of a service providing server.
Fig. 6 is a sequence diagram illustrating an example of a registration process.
Fig. 7 is a sequence diagram illustrating an example of a security management process for a case where a card ID is recorded on a card/tag.
Fig. 8 is a sequence diagram illustrating an example of a security management process for a case where a card ID is recorded in an SE or HCE.
Fig. 9 is a diagram showing examples of attribute information (ATTR) and various IDs.
Fig. 10 is a diagram showing examples of a correspondence relationship between attribute information (ATTR) and a service.
Fig. 11 is a block diagram illustrating an example hardware configuration of the user terminal according to an embodiment of the present disclosure.

### MODE FOR CARRYING OUT THE INVENTION

Preferred embodiments of the present disclosure will now be described in detail with reference to the accompanying drawings. Note that, in the description and the drawings, components having substantially the same function and configuration are denoted by the same reference numerals, and redundant descriptions are omitted.

Furthermore, in the description and the drawings, a plurality of components having substantially the same or similar function and configuration may be distinguished from one another by the same reference numeral followed by a unique number. However, in a case where there is no need to distinguish a plurality of components having substantially the same or similar function and configuration from one another, only the same reference numeral is given thereto. Furthermore, similar components in different embodiments may be distinguished from one another by the same reference numeral followed by a unique alphabetical letter. However, in a case where there is no need to distinguish the similar components from one another, only the same reference numeral is given thereto.

Note that descriptions will be provided in the following order.
1. Overview
2. Details of embodiments
   2.1. Example system configuration
   2.2. Example functional configuration of user terminal
   2.3. Example functional configuration of authentication server
   2.4. Example functional configuration of management server
   2.5. Example functional configuration of service providing server
3. Detailed functions of system
   3.1. Registration process
   3.2. Security management process
   3.3. Service providing process
4. Example hardware configuration
5. Conclusion
6. Examples

### <1. Overview>

First, the following describes an outline of an embodiment of the present disclosure. In recent years, various systems providing various services (for example, electronic settlement, use of coupons, and so on) to users have been known. Values are used for providing services to users. A value is information necessary for providing a service to a user. For example, in a case where a credit card is used as a card, a credit number may correspond to a value. Alternatively, in a case where a prepaid card is used as a card, a remaining amount that can be paid (balance) may correspond to a value.

Preferably, a service is provided to a user after the validity of a value is secured and the validity of the user accessing the value is secured. The validity of a value may be secured by successful card authentication (for example, authentication with a card ID read from the card). On the other hand, the validity of the user accessing the value may be secured by successful user authentication (for example, authentication with a password, authentication with biometric information, or the like).

There are various modes of holding a card ID. For example, a card ID may be recorded on a credit card, or may be recorded on a paper medium instead of the credit card (for example, a service number or the like may be recorded on a coupon). Furthermore, a card ID may be recorded on a non-contact IC card, or may even be included in a QR code (registered trademark) in recent years; modes of holding a card ID and system configurations for the card ID have been diversified. Note that, in the present embodiment, a "card" refers to a recording medium, and the material, shape, and the like of the recording medium are not particularly limited. In addition, in the present embodiment, an ID recorded by means of such card is called a "card ID".

On the other hand, there are also various modes of holding a value. Examples of modes of holding a value may include, for example, a first mode in which a value is present locally in, for example, a secure element (SE) (hereinafter also called a "local type") and a second mode in which a card ID is present locally while a value corresponding to the card ID is present in a cloud (hereinafter also called a "cloud type"). A mode in which a QR code (registered trademark) having an effective period is issued on the server and the QR code (registered trademark) is displayed on the user terminal (a smartphone or the like, for example) so that the QR code (registered trademark) is shown to the user is considered to be an extended type of the second mode described above.

Furthermore, the advancement of network technology is making a technology called host card emulation (HCE) more widespread. By using the HCE, it is now possible to construct a cloud-type system similar to the above-described second mode (cloud type) while ensuring the security equivalent to the above-described first mode (local type).

In a case where the second mode (cloud type) is used, access to a value can be synonymous with a transaction. Therefore, in a case where the second mode (cloud type) is used, a method that may be adopted includes identifying in real time, as access to a value, a transaction conducted when a service (for example, electronic payment, use of a coupon, or the like) is used, thereby providing a value-added service on the basis of the identified result. Such a method may also be very effective in constructing a system.

Important factors in constructing the system include not only securing the validity of a value but also securing the validity of the user accessing the value. For example, in a case where the first mode (local type) is used, the validity of a value may be secured by mutual authentication between an SE and a reader/writer (hereinafter also called an "R/W").

On the other hand, in a case where a card ID is recorded in the SE that is embedded in the user terminal, the validity of the user accessing the value may depend on whether or not the valid user has held the user terminal incorporating the SE over the R/W. Furthermore, in a case where a card ID is recorded outside the user terminal, the validity of the user accessing the value may depend on whether or not the user authentication has succeeded. For example, in a case where a service management application (hereinafter also called a "service management app") is activated in a case where the user authentication has succeeded, whether or not the user authentication has succeeded may depend on the activation state of the service management app.

Furthermore, as user authentication for activating the service management app, a method based on biometric authentication provided in the user terminal (a smartphone or the like, for example) is also prevalently used in combination with the authentication based on a password (hereinafter also called a "PW"), a PIN code, or the like input by the user (or instead of the authentication based on a password, a PIN code, or the like). Note that secret information input by a user, such as a password or a PIN code, may be hereinafter collectively called a "passcode".

Moreover, in a case of using fast identity online (FIDO), it is now possible to associate the service management app with a valid user (login or the like) through collaboration between biometric authentication provided in the user terminal and a function of the HCE server. More specifically, when the user terminal successfully verifies that the user's biometric information registered in advance matches the user's biometric information detected by a detection device, the user terminal generates a signature with a private key on the basis of a random character string (challenge) and sends the challenge with the signature to the HCE server. The HCE server verifies the challenge with the signature by using the public key corresponding to the private key. Then, if the signature is found valid by the HCE server, the service management app on the user terminal is associated with the valid user.

As described above, in a case of using the cloud type, various methods for controlling access to the value associated with the user are available. However, users do not always have user terminals having the same functions. For example, users do not always have user terminals each equipped with an SE. Similarly, users do not always have user terminals each being capable of cooperating with an HCE server. Therefore, it is desirable to improve the flexibility of the system; however, in a case where the configuration used for card authentication is in common with the configuration used for user authentication in part or in whole, it may be difficult to improve the flexibility of the system.

Therefore, in an embodiment of the present disclosure, for a system that provides services to users, there is provided a description focusing on a technique capable of improving the flexibility of the system while securing the validity of a value and the validity of a user accessing the value. More specifically, in an embodiment of the present disclosure, there is provided a description focusing on a technique capable of improving the flexibility of the system by separating the configuration used for card authentication and the configuration used for user authentication.

An outline of an embodiment of the present disclosure has been described above.

### <2. Details of Embodiments>

Details of embodiments of the present disclosure will now be described.

### [2.1. Example system configuration]

First, the following describes an example configuration of an information processing system according to an embodiment of the present disclosure.

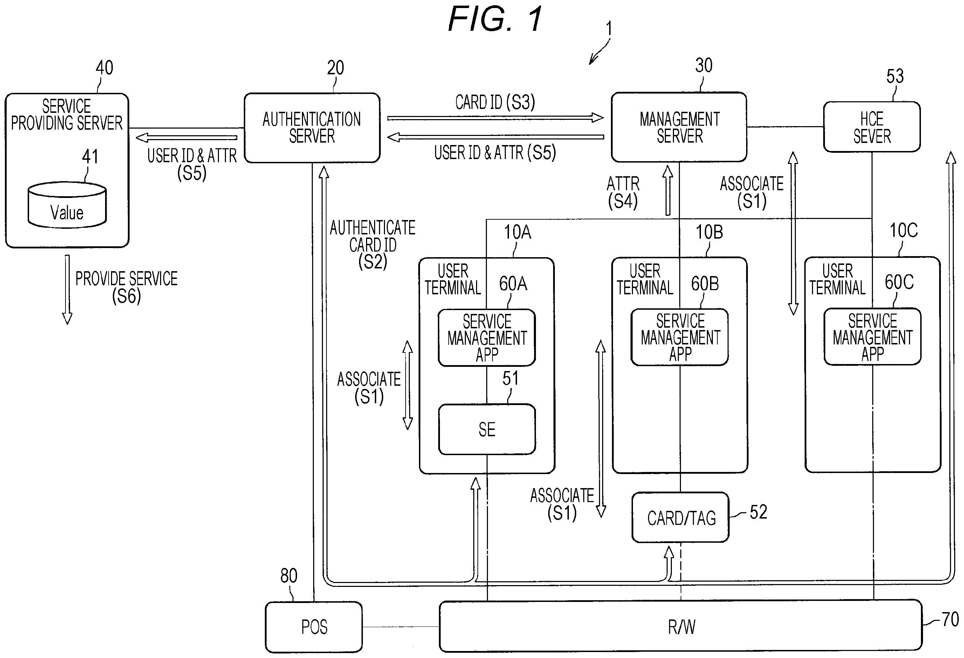

Fig. 1 is a diagram illustrating an example configuration of the information processing system according to an embodiment of the present disclosure. As illustrated in Fig. 1, the information processing system 1 includes a user terminal 10A, a user terminal 10B, a user terminal 10C, an authentication server 20, a management server 30, a service providing server 40, a card/tag 52, an HCE server 53, an R/W 70, and a point of sales (POS) 80. The user terminal 10A, the user terminal 10B, the user terminal 10C, the authentication server 20, the management server 30, the service providing server 40, the HCE server 53, and the point of sales (POS) 80 are connected to a network, and are configured to be capable of communicating with one another via the network.

In an embodiment of the present disclosure, the user terminal 10 stores a service management app 60. In an embodiment of the present disclosure, it is assumed that the service management app 60 is a wallet app, which is an application managing cards such as a credit card and a prepaid card. However, the card managed by the service management app 60 is not particularly limited. For example, the service management app 60 may be an application that manages coupons, point cards, and the like.

User authentication is necessary for activating the service management app 60. That is, the service management app 60 is activated in a case where the user authentication has succeeded, and is not activated in a case where the user authentication has failed. Descriptions are given below by taking passcode (password or PIN code) authentication, biometric authentication, and FIDO authentication as examples of types of user authentication. However, types of user authentication are not limited. Furthermore, examples of types of biometric authentication (authentication types) include fingerprint authentication, voiceprint authentication, face authentication, vein authentication, and iris authentication. However, types of biometric authentication (authentication types) are not particularly limited either.

Note that, in an embodiment of the present disclosure, it is mainly assumed that the user terminal 10 is a smartphone. However, the user terminal 10 is not limited to a smartphone. For example, the user terminal 10 may be a mobile phone, a tablet terminal, a smartphone, a head mounted display, a camera, or a personal computer (PC) .

Descriptions are given below by taking the user terminal 10A, the user terminal 10B, and the user terminal 10C as an example of the user terminal 10. However, the number of user terminals is not particularly limited. The user terminal 10A stores a service management app 60A, the user terminal 10B stores a service management app 60B, and the user terminal 10C stores a service management app 60C.

The user terminal 10A contains an SE 51. That is, the method of equipping the user terminal 10A with the SE corresponds to the Embedded SE (hereinafter also called "eSE") method by which the SE 51 is embedded therein. The SE 51 records a card ID necessary for card authentication corresponding to the user terminal 10A (the service management app 60A on the user terminal 10A). Thus, the card ID corresponding to the user terminal 10A (the service management app 60A on the user terminal 10A) is held by the Embedded SE method (the mode type of holding the card ID corresponding to the user terminal 10A is "Embedded SE").

A card/tag (a card or a tag) 52 is present outside the user terminal 10B. The card/tag 52 records a card ID necessary for card authentication corresponding to the user terminal 10B (the service management app 60B on the user terminal 10B), and the card ID recorded on the card/tag 52 can be read by a reader/writer for the user terminal 10B. Thus, the card ID corresponding to the user terminal 10B (the service management app 60B on the user terminal 10B) is held on the card/tag 52 (the mode type of holding the card ID corresponding to the user terminal 10B is "Card/Tag").

The user terminal 10C is configured to be capable of communicating with the HCE server 53 via a network. The HCE server 53 records a card ID necessary for card authentication corresponding to the user terminal 10C (the service management app 60C on the user terminal 10C), and the card ID recorded on the HCE server 53 may be acquired by the user terminal 10C. Thus, the card ID corresponding to the user terminal 10C (the service management app 60C on the user terminal 10C) is held by the HCE server 53 (the mode type of holding the card ID corresponding to the user terminal 10C is "FIDO").

The card authentication (card ID) and the user authentication (user ID and information necessary for the user authentication) are associated with each other in advance by a registration process (Wallet Service Management) (S1). The information necessary for the user authentication conceivably includes a passcode, biometric information, keys necessary for FIDO (an encryption key and a public key), and the like. In addition, in an embodiment of the present disclosure, it is assumed that the ID of a service licensed by the user (service ID) is associated with the card authentication (card ID) and with the user authentication (user ID and information necessary for the user authentication). However, for example, in a case where the service to be used is fixed, the service ID may not necessarily be associated therewith.

The R/W 70 is placed in a store or the like and, when the user terminal 10A is positioned within a communicative range of the R/W 70 (when the user terminal 10A is held over the R/W 70), the R/W 70 relays mutual authentication between the SE 51 embedded in the user terminal 10A and the authentication server 20. Furthermore, when the card/tag 52 is positioned within the communicative range of the R/W 70 (when the card/tag 52 is held over the R/W 70), the R/W 70 relays mutual authentication between the card/tag 52 and the authentication server 20. Furthermore, when the user terminal 10C is positioned within the communicative range of the R/W 70 (when the user terminal 10C is held over the R/W 70), the R/W 70 relays mutual authentication between the HCE server 53 corresponding to the user terminal 10C and the authentication server 20.

The POS 80 is placed in a store or the like and transfers data received from the R/W 70 to the authentication server 20. Furthermore, the POS 80 transfers data received from the authentication server 20 to the R/W 70.

The authentication server 20 may function as an example of an authentication device. Furthermore, the authentication server 20 may include a computer. When the user terminal 10 is held over the R/W 70, the authentication server 20 performs card authentication through mutual authentication (S2). For example, the authentication server 20 performs mutual authentication with the SE 51 embedded in the user terminal 10A. Furthermore, the authentication server 20 performs mutual authentication with the card/tag 52 corresponding to the user terminal 10B. Furthermore, the authentication server 20 performs mutual authentication with the HCE server 53 corresponding to the user terminal 10C.

When the card authentication based on mutual authentication has succeeded, the authentication server 20 acquires the card ID (from, for example, the SE 51, the card/tag 52, or the HCE server 53). Then, the authentication server 20 transmits the card ID obtained through the card authentication to the management server 30 (S3). On the other hand, in a case where the card authentication based on mutual authentication has failed, the authentication server 20 does not obtain the card ID (that is, the card ID is not transmitted to the management server 30).

The management server 30 may function as an example of an information processing device. Furthermore, the management server 30 may include a computer. Upon receiving the information (card ID) indicating that the card authentication corresponding to the user terminal 10 has succeeded, the management server 30 acquires, on the basis of the user ID corresponding to the card ID, the activation state of the service management app 60 from the user terminal 10 (the service management app 60 on the user terminal 10) identified by the user ID (S4). The activation state of the service management app 60 may include either or both of the type of user authentication for activating the service management app 60 and the information indicating whether or not the service management app 60 is activated.

In addition, the management server 30 acquires attribute information (ATTR) other than the activation state. The management server 30 returns the user ID and the attribute information (ATTR) including the activation state to the authentication server 20 (S5). As described above, according to an embodiment of the present disclosure, the configuration used for card authentication and the configuration used for user authentication are separated, and thus the flexibility of the information processing system 1 can be improved.

The authentication server 20 may function as an example of an authentication device. Furthermore, the authentication server 20 may include a computer. The authentication server 20 transfers the user ID and the attribute information (ATTR) received from the management server 30 to the service providing server 40 (S5). Note that, in an embodiment of the present disclosure, it is mainly assumed that the service providing server 40 is present outside the authentication server 20. However, the authentication server 20 may additionally function as the service providing server 40. In this case, since services are provided by the authentication server 20, the authentication server 20 is not necessary to transfer the user ID and the attribute information (ATTR).

The service providing server 40 may function as an example of a service providing device. Furthermore, the service providing server 40 may include a computer. On the basis of the user ID received from the authentication server 20, the service providing server 40 provides a service to the user terminal 10 (the service management app 60 on the user terminal 10) identified by the user ID (S6). For example, the service provided by the service providing server 40 may be electronic settlement, use of coupons, or the like, but is not particularly limited. In the service providing server 40, a value 41 is present to be used for providing a service.

Furthermore, the service providing server 40 is capable of controlling the service to be provided to the user terminal 10 (the service management app 60 on the user terminal 10) identified by the user ID, on the basis of the attribute information (ATTR) received from the authentication server 20 (for example, the service providing server 40 is capable of controlling the service level). Note that, in a case where the user ID is associated with a service ID, the service providing server 40 provides the service identified by the service ID.

An example configuration of the information processing system 1 according to an embodiment of the present disclosure has been described above.

### [2.2. Example functional configuration of user terminal]

Next, an example functional configuration of the user terminal 10 will be described.

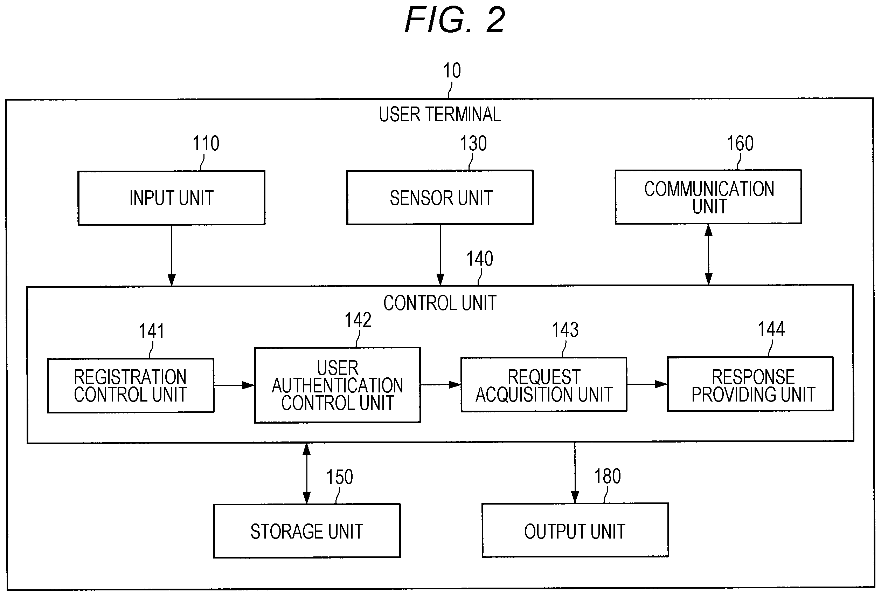

Fig. 2 is a diagram illustrating an example functional configuration of the user terminal 10. As illustrated in Fig. 2, the user terminal 10 includes an input unit 110, a sensor unit 130, a control unit 140, a storage unit 150, a communication unit 160, and an output unit 180. The following describes these functional blocks included in the user terminal 10.

The input unit 110 has a function of receiving operations input by the user. In an embodiment of the present disclosure, it is mainly assumed that the input unit 110 includes a touch panel. However, the input unit 110 may include a mouse, a keyboard, a button, a switch, a lever, or the like. Furthermore, the input unit 110 may include a microphone that detects the user's voice.

The sensor unit 130 obtains sensing data by sensing the environment. In an embodiment of the present disclosure, it is mainly assumed that the sensor unit 130 includes a global positioning system (GPS) sensor and the sensing data includes position information sensed by the GPS sensor. However, the sensing data may be sensed by at least one of a camera (for example, an RGB camera, a depth camera, a polarization camera, or the like), an infrared sensor, an ultrasonic sensor, an acceleration sensor, a gyro sensor, a laser sensor, or a vibration sensor.

The control unit 140 may include, for example, a processing device such as one or a plurality of central processing units (CPUs). In a case where these blocks include a processing device such as a CPU, the processing device may include an electronic circuit. The control unit 140 may be implemented through execution of a program, the execution being performed by the processing device. The control unit 140 includes a registration control unit 141, a user authentication control unit 142, a request acquisition unit 143, and a response providing unit 144. Detailed functions of these blocks will be described later.

The storage unit 150 is a recording medium that includes a memory to store programs to be executed by the control unit 140 and data necessary for executing the programs. Furthermore, the storage unit 150 temporarily stores data for the control unit 140 to perform calculations. For example, the storage unit 150 includes a magnetic storage unit device, a semiconductor storage device, an optical storage device, or a magneto-optical storage device.

The communication unit 160 includes a communication circuit and has a function of communicating with another device via a network. For example, the communication unit 160 has a function of acquiring data from the other device and providing data to the other device. For example, the communication unit 160 includes a communication interface.

The output unit 180 outputs various types of information. For example, the output unit 180 may include a display capable of showing a view visible to the user. In this case, the display may be a liquid crystal display or an organic electro-luminescence (EL) display. Alternatively, the output unit 180 may be a light such as a light-emitting diode (LED).

Note that, in an embodiment of the present disclosure, it is mainly assumed that the input unit 110, the sensor unit 130, the storage unit 150, the communication unit 160, and the output unit 180 are present inside the user terminal 10. However, at least any one of the input unit 110, the sensor unit 130, the storage unit 150, the communication unit 160, or the output unit 180 may be present outside the user terminal 10.

An example functional configuration of the user terminal 10 according to an embodiment of the present disclosure has been described above.

### [2.3. Example functional configuration of authentication server]

Next, an example functional configuration of the authentication server 20 will be described.

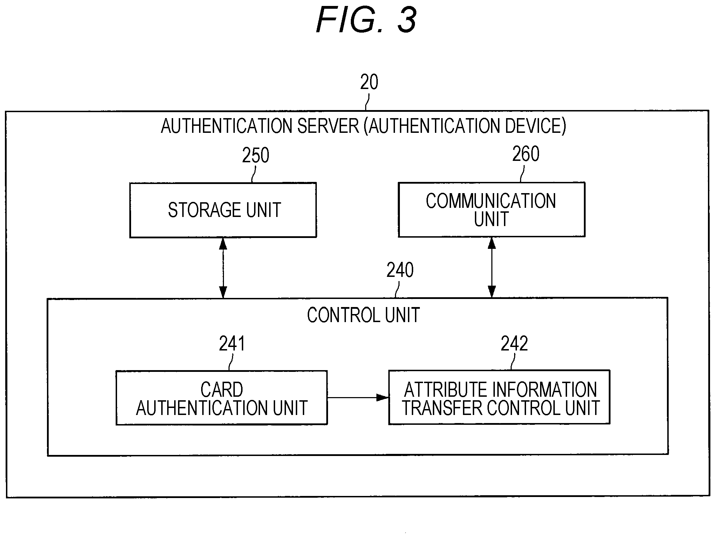

Fig. 3 is a diagram illustrating an example functional configuration of the authentication server 20. As illustrated in Fig. 3, the authentication server 20 includes a control unit 240, a storage unit 250, and a communication unit 260. The following describes these functional blocks included in the authentication server 20.

The control unit 240 may include, for example, a processing device such as one or a plurality of central processing units (CPUs). In a case where these blocks include a processing device such as a CPU, the processing device may include an electronic circuit. The control unit 240 may be implemented through execution of a program, the execution being performed by the processing device. The control unit 240 includes a card authentication unit 241 and an attribute information transfer control unit 242. Detailed functions of these blocks will be described later.

The storage unit 250 is a recording medium that includes a memory to store programs to be executed by the control unit 240 and data necessary for executing the programs. Furthermore, the storage unit 250 temporarily stores data for the control unit 240 to perform calculations. For example, the storage unit 250 includes a magnetic storage unit device, a semiconductor storage device, an optical storage device, or a magneto-optical storage device.

The communication unit 260 includes a communication circuit and has a function of communicating with another device via a network. For example, the communication unit 260 has a function of acquiring data from the other device and providing data to the other device. For example, the communication unit 260 includes a communication interface.

Note that, in an embodiment of the present disclosure, it is mainly assumed that the storage unit 250 and the communication unit 260 are present inside the authentication server 20. However, at least any one of the storage unit 250 or the communication unit 260 may be present outside the authentication server 20.

An example functional configuration of the authentication server 20 according to an embodiment of the present disclosure has been described above.

### [2.4. Example functional configuration of management server]

Next, an example functional configuration of the management server 30 will be described.

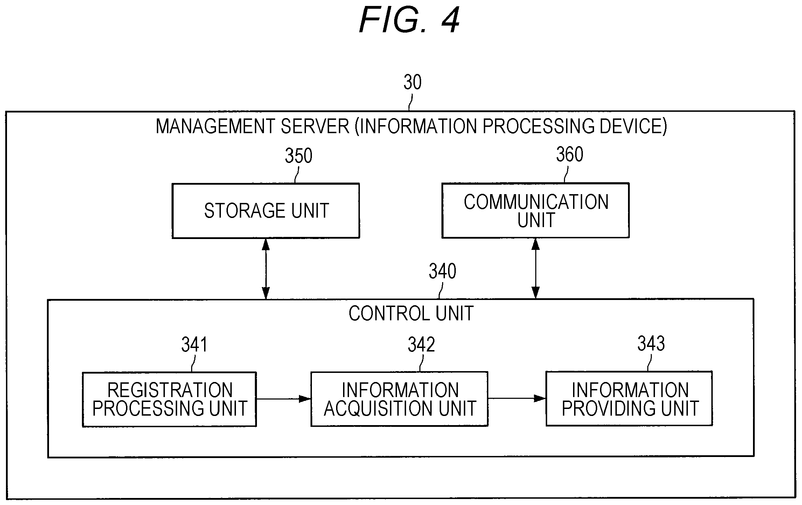

Fig. 4 is a diagram illustrating an example functional configuration of the management server 30. As illustrated in Fig. 4, the management server 30 includes a control unit 340, a storage unit 350, and a communication unit 360. The following describes these functional blocks included in the management server 30.

The control unit 340 may include, for example, a processing device such as one or a plurality of central processing units (CPUs). In a case where these blocks include a processing device such as a CPU, the processing device may include an electronic circuit. The control unit 340 may be implemented through execution of a program, the execution being performed by the processing device. The control unit 340 includes a registration processing unit 341, an information acquisition unit 342, and an information providing unit 343. Detailed functions of these blocks will be described later.

The storage unit 350 is a recording medium that includes a memory to store programs to be executed by the control unit 340 and data necessary for executing the programs. Furthermore, the storage unit 350 temporarily stores data for the control unit 340 to perform calculations. For example, the storage unit 350 includes a magnetic storage unit device, a semiconductor storage device, an optical storage device, or a magneto-optical storage device.

The communication unit 360 includes a communication circuit and has a function of communicating with another device via a network. For example, the communication unit 360 has a function of acquiring data from the other device and providing data to the other device. For example, the communication unit 360 includes a communication interface.

Note that, in an embodiment of the present disclosure, it is mainly assumed that the storage unit 350 and the communication unit 360 are present inside the management server 30. However, at least any one of the storage unit 350 or the communication unit 360 may be present outside the management server 30.

An example functional configuration of the management server 30 according to an embodiment of the present disclosure has been described above.

### [2.5. Example functional configuration of service providing server]

Next, an example functional configuration of the service providing server 40 will be described.

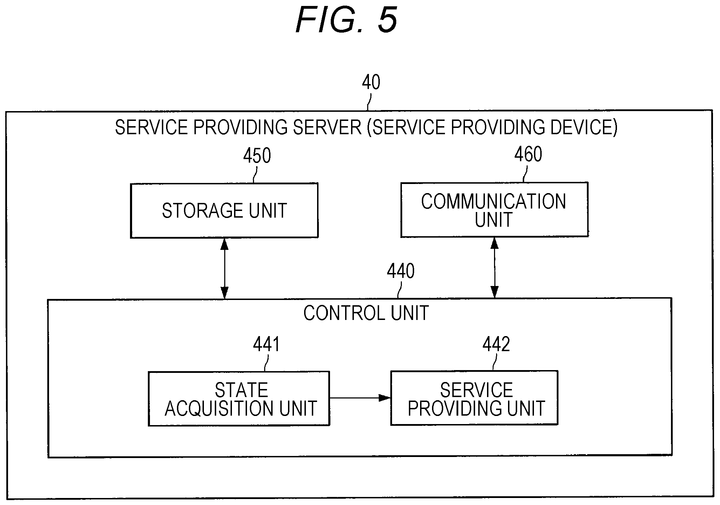

Fig. 5 is a diagram illustrating an example functional configuration of the service providing server 40. As illustrated in Fig. 5, the service providing server 40 includes a control unit 440, a storage unit 450, and a communication unit 460. The following describes these functional blocks included in the service providing server 40.

The control unit 440 may include, for example, a processing device such as one or a plurality of central processing units (CPUs). In a case where these blocks include a processing device such as a CPU, the processing device may include an electronic circuit. The control unit 440 may be implemented through execution of a program, the execution being performed by the processing device. The control unit 440 includes a state acquisition unit 441 and a service providing unit 442. Detailed functions of these blocks will be described later.

The storage unit 450 is a recording medium that includes a memory to store programs to be executed by the control unit 440 and data necessary for executing the programs. Furthermore, the storage unit 450 temporarily stores data for the control unit 440 to perform calculations. For example, the storage unit 450 includes a magnetic storage unit device, a semiconductor storage device, an optical storage device, or a magneto-optical storage device.

The communication unit 460 includes a communication circuit and has a function of communicating with another device via a network. For example, the communication unit 460 has a function of acquiring data from the other device and providing data to the other device. For example, the communication unit 460 includes a communication interface.

Note that, in an embodiment of the present disclosure, it is mainly assumed that the storage unit 450 and the communication unit 460 are present inside the service providing server 40. However, at least any one of the storage unit 450 or the communication unit 460 may be present outside the service providing server 40.

An example functional configuration of the service providing server 40 according to an embodiment of the present disclosure has been described above.

### <3. Detailed functions of system>

The following describes detailed functions of the information processing system 1 according to an embodiment of the present disclosure.

### (3.1. Registration process)

First, a registration process (Wallet Service Management) will be described. The following mainly describes a case where the registration process is performed as the user registration during initial settings of the service management app. However, the registration process to be performed is not limited to any particular timing.

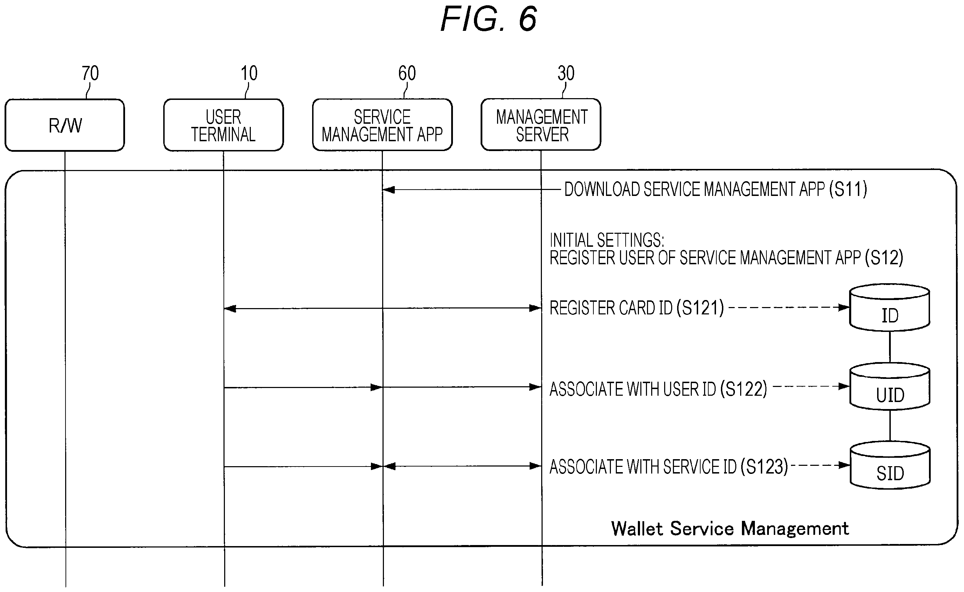

Fig. 6 is a sequence diagram illustrating an example of the registration process. As illustrated in Fig. 6, the user terminal 10 downloads the service management app 60 on the basis of the operation by the user to start the downloading (S11). Subsequently, the user terminal 10 performs user registration for the service management app 60 as an initial setting of the service management app 60 (S12). In the user registration, the registration control unit 141 in the user terminal 10 controls the registration of a card ID (S121), associates the user ID with the card ID (S122), and associates the service ID (SID) selected by the user with the card ID (S123).

In the control of registration of the card ID (S121), the registration control unit 141 provides the card ID to the management server 30 via the communication unit 160. Then, upon acquiring the card ID via the communication unit 360, the registration processing unit 341 in the management server 30 registers the card ID in the storage unit 350.

For example, in a case where the card ID is recorded in the SE 51, the card ID may be acquired by the management server 30 through mutual authentication between the SE 51 and the management server 30. In a case where the card ID is recorded on the card/tag 52, the card ID may be acquired by the management server 30 through mutual authentication between the card/tag 52 of the user terminal 10B and the management server 30 via the reader/writer. In a case where the card ID is recorded in the HCE server 53, the card ID may be acquired by the management server 30 through mutual authentication between the HCE server 53 and the management server 30.

In the association with the user ID (S122), the registration control unit 141 provides the user ID to the management server 30 via the communication unit 160. Then, upon acquiring the user ID via the communication unit 360, the registration processing unit 341 in the management server 30 associates the user ID with the card ID recorded in the storage unit 350. As a result, information necessary for user authentication (for example, a passcode, biometric information, a key necessary for FIDO, or the like) is associated with the card ID.

In the association with the service ID (S123), the registration control unit 141 provides the service ID selected by the user to the management server 30 via the communication unit 160. Then, upon acquiring the service ID via the communication unit 360, the registration processing unit 341 in the management server 30 associates the service ID with the card ID recorded in the storage unit 350. As a result, the service selected by the user is associated with the card ID. Note that, for example, in a case where the service to be used is fixed, the service ID may not necessarily be associated therewith as described above.

The registration process has been described above.

### (3.2. Security management process)

After the registration process is performed as described above, a security management process (Security Management) is performed. For example, (1) in a case where the card ID is recorded in the SE 51 that is embedded in the user terminal 10A, the security management process is started, triggered by holding of the user terminal 10A over the R/W 70. (2) In a case where the card ID is recorded on the card/tag 52 that is present outside the user terminal 10B, the security management process is started, triggered by holding of the card/tag 52 over the R/W 70. (3) In a case where the card ID is recorded in the HCE server 53 that corresponds to the user terminal 10C, the security management process is started, triggered by holding of the user terminal 10C over the R/W 70.

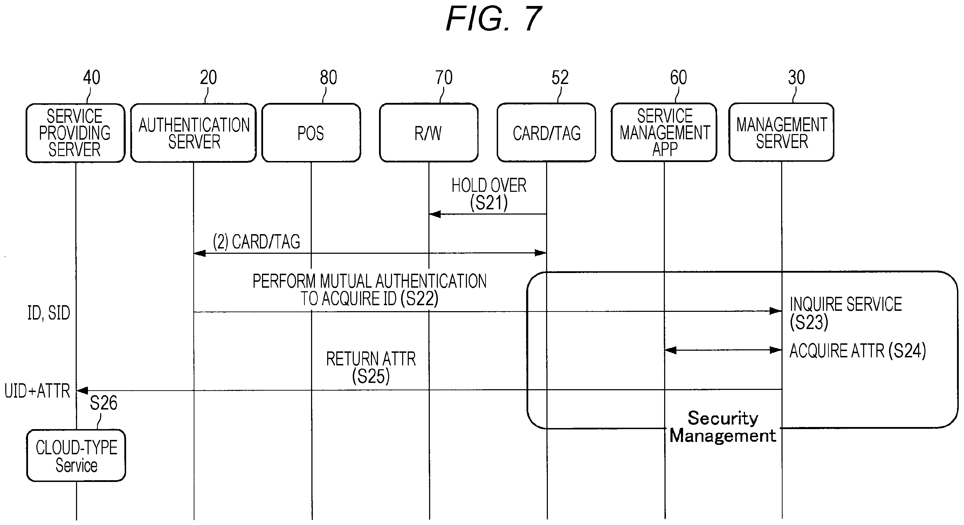

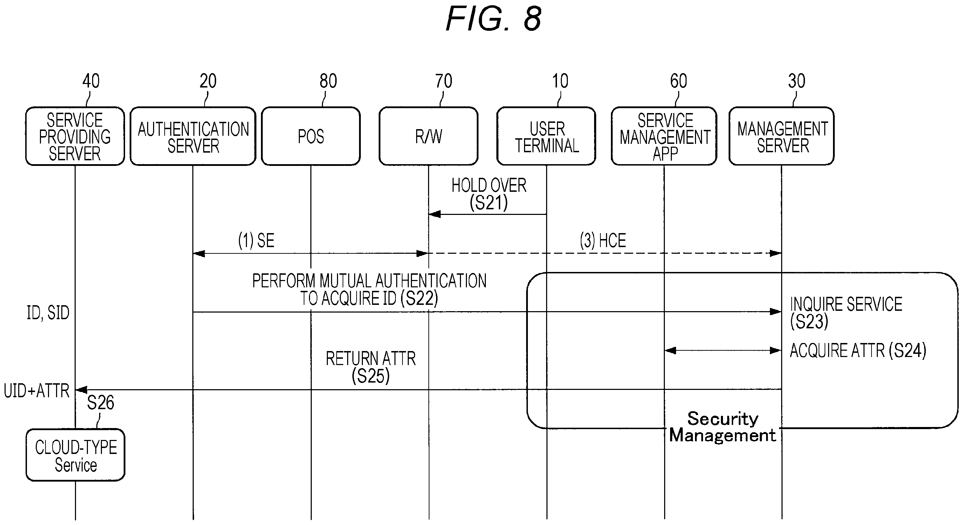

Referring to Fig. 7, the following describes (2) the security management process performed in a case where the card ID is recorded on the card/tag. Then, the security management process performed in cases where (1) the card ID is recorded in the SE and (3) the card ID is recorded in the HCE will be described with reference to Fig. 8. Note that the following description also takes into consideration both of the case where the holding by the user takes place with the service management app is activated and the case where the holding by the user takes place with the service management app not activated.

Fig. 7 is a sequence diagram illustrating an example of the security management process for a case where the card ID is recorded on the card/tag. First, the card/tag 52 is held over the R/W 70 by the user with the service management app activated or not activated (S21). The service management app is activated in a case where the user authentication controlled by the user authentication control unit 142 has succeeded. When the card/tag 52 is held over the R/W 70, the card authentication unit 241 in the authentication server 20 performs card authentication corresponding to the user terminal 10B through mutual authentication with the card/tag 52 via the R/W 70.

When the card authentication has succeeded, the card authentication unit 241 acquires the card ID from the card/tag 52 (S22), and, as a service inquiry, provides the information (card ID) indicating that the card authentication has succeeded to the management server 30 via the communication unit 260 (S23). At this time, the service ID may be provided to the management server 30 together with the card ID. Upon acquiring the information (card ID) indicating that the card authentication has succeeded, the information acquisition unit 342 in the management server 30 acquires the attribute information (ATTR) including the activation state of the service management app 60B on the user terminal 10B (S24).

Specifically, in a case where the information acquisition unit 342 acquires the information (card ID) indicating that the card authentication has succeeded, the information acquisition unit 342 acquires the user ID associated with the card ID (or the user ID associated with the card ID and the service ID), and provides a request for transmission of the attribute information (ATTR) including the activation state of the service activation app to the user terminal 10B corresponding to the user ID via the communication unit 360. When the request acquisition unit 143 in the user terminal 10B acquires the request for transmission via the communication unit 160, the response providing unit 144 provides, as a response to the request for transmission, the attribute information (ATTR) including the activation state to the management server 30 via the communication unit 160. As a result, the information acquisition unit 342 in the management server 30 acquires the attribute information (ATTR) including the activation state of the service management app 60B from the user terminal 10B.

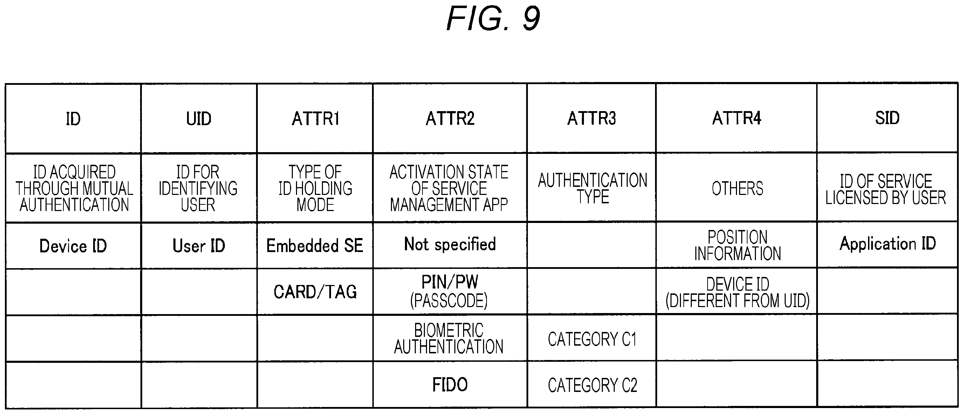

Here, examples of the attribute information (ATTR) and various IDs will be described with reference to Fig. 9. Fig. 9 is a diagram showing examples of the attribute information (ATTR) and various IDs. With reference to Fig. 9, ID, UID, and SID are shown as examples of various IDs and ATTR1 to ATTR4 are shown as examples of the attribute information (ATTR).

As shown in Fig. 9, the ID is an ID acquired through mutual authentication and corresponds to the card ID described above. The UID is an ID for identifying a user and corresponds to the user ID described above. The SID is an ID of a service licensed by the user and corresponds to the service ID described above.

Furthermore, as shown in Fig. 9, the attribute information 1 (ATTR1) indicates the mode type of holding the card ID (ID). Examples of the mode type of holding the card ID (ID) include "Embedded SE" and "Card/Tag". Moreover, examples of the mode type of holding the card ID (ID) also include "FIDO" as described above.

The attribute information 2 (ATTR2) indicates the activation state of the service management app. As shown in Fig. 9, examples of the activation state of the service management app include "Not Specified", "PIN/PW (Passcode)", "Biometric Authentication", and "FIDO". "Not Specified" indicates the state in which the service management app is not activated. "PIN/PW (Passcode)" indicates that the type of user authentication used for activating the service management app is "Passcode (Password or PIN Code)". "Biometric Authentication" indicates that the type of user authentication used for activating the service management app is "Biometric Authentication". "FIDO" indicates that the type of user authentication used for activating the service management app is "FIDO".

The attribute information 3 (ATTR3) indicates, if applicable, the type of biometric authentication (authentication type) used for user authentication. With reference to Fig. 9, "Category C1" is shown as an authentication type corresponding to ATTR2 "Biometric Authentication". Furthermore, "Category C2" is shown as an authentication type corresponding to ATTR2 "FIDO". As described above, types of biometric authentication (authentication types) are not particularly limited. Examples of the type of biometric authentication (authentication type) are as described above.

The attribute information 4 (ATTR4) indicates other information. With reference to Fig. 9, "Position Information" and "Device ID" are shown as the attribute information 4 (ATTR4). "Position information" is the position information regarding the user terminal 10 and can be detected by the sensor unit 130. "Device ID" is information for identifying a device and can be acquired from the storage unit 150. Note that, as described later, the device ID may be used to determine whether or not the service management app has been activated by a valid user terminal 10 (mother ship). Therefore, as shown in Fig. 9, the device ID may be particularly effectively utilized in a case where the mode of holding the card ID is "Card/Tag" (in a case where the security management process is triggered by holding of a recording medium other than the user terminal 10 over the R/W).

Referring back to Fig. 7, the following continues descriptions. In the management server 30, the information providing unit 343 and the information acquisition unit 342 provide (return) the attribute information (ATTR) and the user ID (UID) to the service providing server 40 via the communication unit 360 (S25). At this time, the attribute information (ATTR) and the user ID (UID) may be transferred by the attribute information transfer control unit 242 in the authentication server 20 from the management server 30 to the service providing server 40. Note that, as described above, in a case where the authentication server 20 also functions as the service providing server 40, the authentication server 20 is not necessary to transfer the user ID and the attribute information (ATTR).

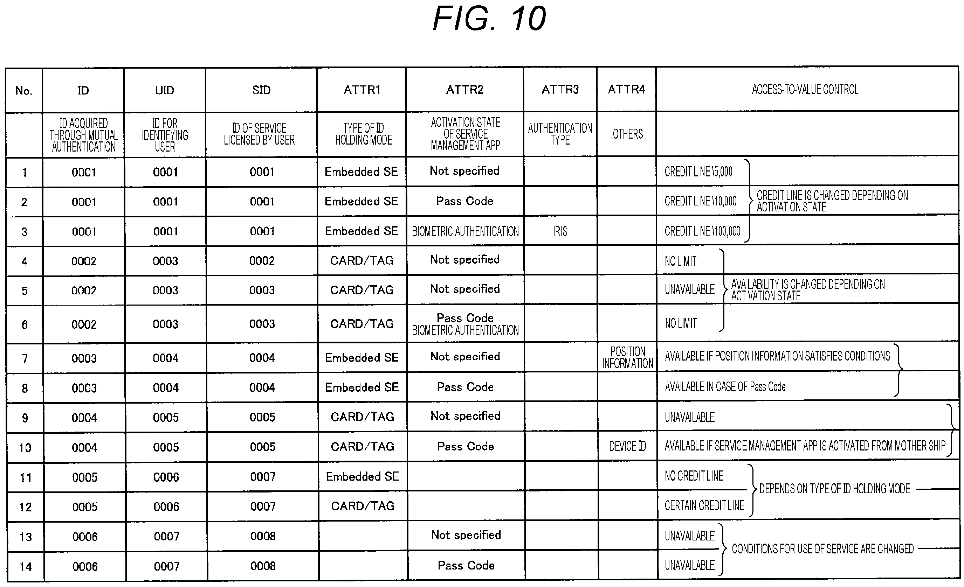

Subsequently, the state acquisition unit 441 in the service providing server 40 acquires the user ID and the attribute information (ATTR) via the communication unit 460. The service providing unit 442 provides a service (cloud-type service) in accordance with the attribute information (ATTR) to the user terminal 10B corresponding to the user ID (S26). Services provided by the service providing unit 442 will be described later in detail with reference to Fig. 10.

Fig. 8 is a sequence diagram illustrating an example of the security management process for a case where the card ID is recorded in the SE or HCE. First, the user terminal 10A or the user terminal 10C is held over the R/W 70 by the user with the service management app activated or not activated (S21). The service management app is activated in a case where the user authentication controlled by the user authentication control unit 142 has succeeded. When the user terminal 10A or the user terminal 10C is held over the R/W 70, the card authentication unit 241 in the authentication server 20 performs the card authentication corresponding to the user terminal 10A or the user terminal 10C through mutual authentication with the SE 51 (Fig. 8 (1)) or the HCE server 53 (Fig. 8 (3)) via the R/W 70.

When the card authentication has succeeded, the card authentication unit 241 acquires the card ID from the SE 51 or the HCE server 53 (S22), and, as a service inquiry, provides the information (card ID) indicating that the card authentication has succeeded to the management server 30 via the communication unit 260 (S23). At this time, the service ID may be provided to the management server 30 together with the card ID. Subsequent processes (S24 to S26) may be performed in a similar manner as the processes (S24 to S26) described with reference to Fig. 7, and thus detailed descriptions of the subsequent processes (S24 to S26) are omitted.

The security management process has been described above.

### (3.3. Service providing process)

After the registration process is carried out as described above, a service providing process is performed. Here, the service providing unit 442 provides a service in accordance with the attribute information (ATTR) to the user terminal 10 as described above, but the correspondence relationship between attribute information (ATTR) and a service is not particularly limited. Referring to Fig. 10, the following mainly describes an example of the correspondence relationship between attribute information (ATTR) and a service.

Fig. 10 is a diagram showing examples of the correspondence relationship between attribute information (ATTR) and a service. For example, the service providing unit 442 may provide a first service to the user terminal 10 in a case where the service management app is activated, or may provide a second service, which is more limited than the first service, to the user terminal 10 in a case where the service management app is not activated.

Alternatively, the service providing unit 442 may provide a service in accordance with the type of user authentication for activating the service management app to the user terminal 10. More specifically, the service providing unit 442 may provide a first service to the user terminal 10 in a case where the type of user authentication for activating the service management app is a first type, or may provide a second service, which is more limited than the first service, to the user terminal 10 in a case where the type of user authentication for activating the service management app is a second type, which is different from the first type (in a case where the user authentication is simpler than the first type).

Here, the first service and the second service each may be any service. For example, the first service may be a service provided within a first credit line, and the second service may be a service provided within a second credit line, which is smaller than the first credit line. With reference to Nos. 1 to 3 in Fig. 10, there is shown an example in which the credit line is most limited in a case where the service management app is not activated, that is, in a case where ATTR2 is "Not Specified", the credit line is less limited in a case where the type of user authentication is "Passcode", and the credit line is least limited in a case where the type of user authentication is "Biometric Authentication", which is more complicated than "Passcode".

Furthermore, for example, the service providing unit 442 may provide the service to the user terminal 10 in a case where the service management app is activated, or may prevent a service from being provided to the user terminal 10 in a case where the service management app is not activated. With reference to Nos. 5 and 6 in Fig. 10, there is shown an example in which a service is unavailable in a case where the service management app is not activated, that is, in a case where ATTR2 is "Not Specified", and the service is available without limitation in a case where the service management app is activated. Note that No. 4 in Fig. 10 indicates that the service is available even when the service is not licensed by the user.

Furthermore, for example, the service providing unit 442 may provide a service in accordance with the position information regarding the user terminal 10 to the user terminal 10. More specifically, the service providing unit 442 may provide a service to the user terminal 10 in a case where the position information regarding the user terminal 10 satisfies a predetermined condition, or may prevent the service from being provided to the user terminal 10 in a case where the position information regarding the user terminal 10 does not satisfy the predetermined condition.

Here, the predetermined condition is not particularly limited. An example of the predetermined condition may be a condition that the position information regarding the user terminal 10 indicates that the user terminal 10 is in an event venue. Then, the service provision can be controlled such that the service is provided to the user terminal 10 when the user is in the event venue, while the service is not provided to the user terminal 10 when the user is not in the event venue.

Note that, with reference to Nos. 7 and 8 in Fig. 10, there is shown an example in which it is determined whether or not the position information regarding the user terminal 10 satisfies the predetermined condition only in a case where the service management app is not activated, that is, in a case where ATTR2 is "Not Specified", and the service is available without limitation in a case where the type of user authentication is "Passcode". In this way, the user terminal 10 may be provided with a service in accordance with the position information and other attribute information (the type of user authentication in this example) regarding the user terminal 10.

Furthermore, for example, the service providing unit 442 may provide a service in accordance with the device ID of the user terminal 10 to the user terminal 10. For example, in a case where the device ID of the user terminal 10 is the device ID of the valid user terminal 10 (mother ship), the service providing unit 442 may provide a service to the user terminal 10 because it is determined that the service management app has been activated by the valid user terminal 10 (mother ship). Alternatively, in a case where the device ID of the user terminal 10 is the device ID of a valid user terminal 10 (mother ship), the service providing unit 442 may provide a service to the user terminal 10 as long as the service management app is activated, or in a case where the device ID of the user terminal 10 is the device ID of an invalid user terminal 10, the service providing unit 442 may provide a service to the user terminal 10 only in a case where the user authentication has succeeded. As a result, it may be possible to prevent unauthorized use of the user terminal 10 belonging to another person.

Note that, with reference to Nos. 9 and 10 in Fig. 10, there is shown an example in which the service is unconditionally unavailable in a case where the service management app is not activated, that is, in a case where ATTR2 is "Not Specified", and it is determined whether or not the service management app has been activated from the mother ship only in a case where the mode of holding a card ID is "Card/Tag". This is because, in a case where a recording medium (a card/tag, for example) different from the user terminal 10 is held over the R/W, unauthorized use of a user terminal belonging to another person may occur as described above.

Furthermore, for example, the service providing unit 442 may provide a service in accordance with the mode type of holding a card ID to the user terminal 10. More specifically, the service providing unit 442 may provide a third service to the user terminal 10 in a case where the mode type of holding a card ID is a third type, or may provide a fourth service, which is more limited than the third service, to the user terminal 10 in a case where the mode type of holding a card ID is a fourth type, which is different from the third type (in a case where the holding mode is less secure than the third type).

Here, the third service and the fourth service each may be any service. For example, the third service may be a service provided within a third credit line, and the fourth service may be a service provided within a fourth credit line, which is smaller than the third credit line.

Furthermore, for example, the service providing unit 442 may provide a service to the user terminal 10 in a case where the mode type of holding a card ID is a third type, or may prevent a service from being provided to the user terminal 10 in a case where the mode type of holding a card ID is a fourth type, which is different from the third type (in a case where the holding mode is less secure than the third type). With reference to Nos. 11 and 12 in Fig. 10, there is shown an example in which the credit line is not limited in a case where the mode type of holding a card ID is "Embedded SE", and the credit line is limited in a case where the mode type of holding a card ID is "Card/Tag".

Furthermore, in a case where the user terminal 10 has been lost, a notification that the user terminal 10 has been lost is preferably sent by the user to the service providing server 40. Then, the service providing unit 442 can prevent unauthorized use of the user terminal 10 by changing the conditions for use of services applied to the user terminal 10 that has been lost. With reference to Nos. 13 and 14 in Fig. 10, there is shown an example in which the service providing unit 442 changes the conditions for use of services applied to the lost user terminal 10 to "Unavailable". However, the service providing unit 442 may tighten the conditions for use of services applied to the lost user terminal 10.

The service providing process has been described above.

### <4. Example hardware configuration>

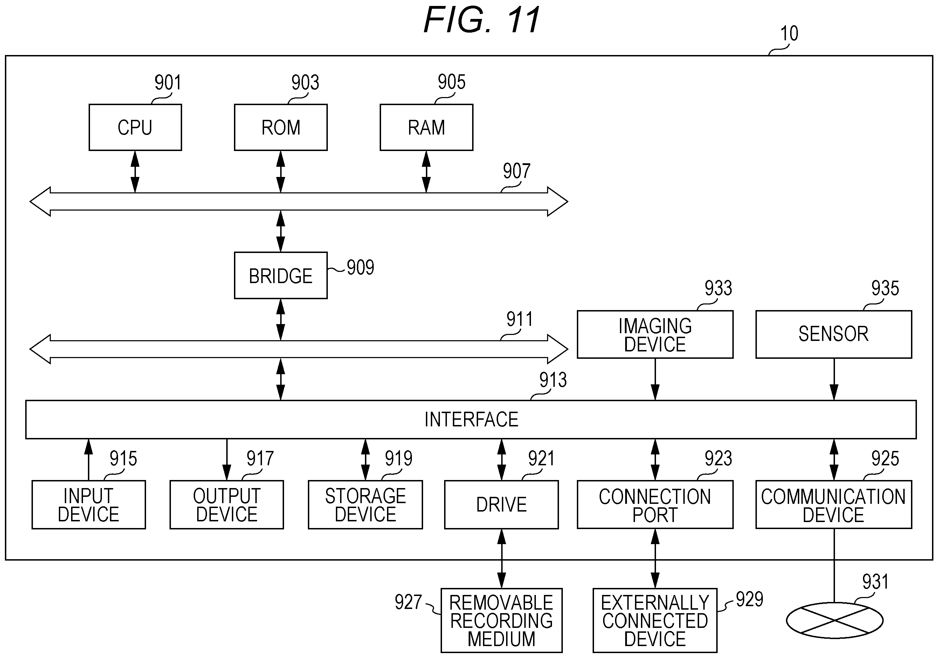

Next, a hardware configuration of the user terminal 10 according to an embodiment of the present disclosure will be described with reference to Fig. 11. Fig. 11 is a block diagram illustrating an example hardware configuration of the user terminal 10 according to an embodiment of the present disclosure. Note that hardware configurations of the authentication server (authentication device) 20, the management server (information processing device) 30, and the service providing server (service providing device) 40 may also be implemented in a similar manner as the hardware configuration illustrated in Fig. 11. Note that, however, any unnecessary component may be deleted from the hardware configuration illustrated in Fig. 11, if appropriate.

As illustrated in Fig. 11, the user terminal 10 includes a central processing unit (CPU) 901, a read only memory (ROM) 903, and a random access memory (RAM) 905. Furthermore, the user terminal 10 may include a host bus 907, a bridge 909, an external bus 911, an interface 913, an input device 915, an output device 917, a storage device 919, a drive 921, a connection port 923, and a communication device 925. Moreover, the user terminal 10 may include an imaging device 933 and a sensor 935, if necessary. The user terminal 10 may include, instead of or in addition to the CPU 901, a processing circuit called a digital signal processor (DSP) or an application specific integrated circuit (ASIC).

The CPU 901 functions as an arithmetic processing device and a control device, and controls operations in the user terminal 10 in whole or in part in accordance with various programs recorded in the ROM 903, the RAM 905, the storage device 919, or the removable recording medium 927. The ROM 903 stores programs, operation parameters, and the like to be used by the CPU 901. The RAM 905 temporarily stores programs to be used during the execution by the CPU 901, parameters that appropriately vary during the execution, and the like. The CPU 901, the ROM 903, and the RAM 905 are connected to one another by a host bus 907 including an internal bus such as a CPU bus. Moreover, the host bus 907 is connected to an external bus 911 such as a peripheral component interconnect/interface (PCI) bus via the bridge 909.

The input device 915 is a device operated by the user, such as a mouse, a keyboard, a touch panel, a button, a switch, and a lever, for example. The input device 915 may include a microphone that detects the user's voice. The input device 915 may be, for example, a remote control device employing infrared rays or other radio waves, or may be an externally connected device 929 supporting operation of the user terminal 10, such as a mobile phone. The input device 915 includes an input control circuit that generates an input signal on the basis of the information input by the user and outputs the input signal to the CPU 901. By operating the input device 915, the user inputs various types of data to the user terminal 10 and instructs the user terminal 10 to do processing operations. Furthermore, the imaging device 933, which will be described later, can also function as an input device by imaging movement of the user's hand, the user's finger, and the like. During the operation, a pointing position may be determined in accordance with the movement of the hand or the orientation of the finger.

The output device 917 includes a device that can visually or audibly give notification of the acquired information to the user. The output device 917 may be, for example, a display device such as a liquid crystal display (LCD), a plasma display panel (PDP), an organic electro-luminescence (EL) display, or a projector, a hologram display device, a sound output device such as a speaker and a headphone, a printer device, and the like. The output device 917 outputs a result obtained by processing in the user terminal 10 as an image such as a text or an image, or as a sound such as a voice or audio. Furthermore, the output device 917 may include a light such as a light-emitting diode (LED).

The storage device 919 is a data storage device configured as an example of the storage unit in the user terminal 10. The storage device 919 includes, for example, a magnetic storage unit device such as a hard disk drive (HDD), a semiconductor storage device, an optical storage device, or a magneto-optical storage device. The storage device 919 stores programs to be executed by the CPU 901 and various types of data, as well as various types of data acquired from the outside and other data.

The drive 921 is a reader/writer for the removable recording medium 927 such as a magnetic disk, an optical disk, a magneto-optical disk, or a semiconductor memory, and is built in, or externally attached to, the user terminal 10. The drive 921 reads information recorded on the attached removable recording medium 927 and outputs the information to the RAM 905. Furthermore, the drive 921 writes a record to the attached removable recording medium 927.

The connection port 923 is a port for directly connecting a device to the user terminal 10. The connection port 923 may be, for example, a universal serial bus (USB) port, an IEEE 1394 port, a small computer system interface (SCSI) port, or the like. Alternatively, the connection port 923 may be an RS-232C port, an optical audio terminal, a high-definition multimedia interface (HDMI (registered trademark)) port, or the like. By connecting the externally connected device 929 to the connection port 923, various types of data can be exchanged between the user terminal 10 and the externally connected device 929.

The communication device 925 is, for example, a communication interface including a communication device or the like for connecting to the communication network 931. The communication device 925 may be, for example, a communication card or the like for a wired or wireless local area network (LAN), Bluetooth (registered trademark), or wireless USB (WUSB). Alternatively, the communication device 925 may be a router for optical communication, a router for asymmetric digital subscriber line (ADSL), a modem for various types of communication, or the like. The communication device 925 transmits and receives signals and the like to and from, for example, the Internet or another communication device using a predetermined protocol such as TCP/IP. Furthermore, the communication network 931 connected to the communication device 925 is a network connected in a wired or wireless manner, and may be, for example, the Internet, a home LAN, infrared communication, radio wave communication, satellite communication, or the like.

The imaging device 933 is a device that captures an image of a real space to generate a captured image using various members including, for example, an imaging element such as a charge coupled device (CCD) or a complementary metal oxide semiconductor (CMOS) and a lens for controlling forming of an image of a subject on the imaging element. The imaging device 933 may capture a still image, or may capture a moving image.

The sensor 935 may include, for example, various sensors such as a distance measuring sensor, an acceleration sensor, a gyro sensor, a geomagnetic sensor, a vibration sensor, an optical sensor, and a sound sensor. The sensor 935 acquires, for example, information regarding the state of the user terminal 10 itself such as the posture of the housing of the user terminal 10, as well as information regarding the surrounding environment of the user terminal 10 such as brightness and noise around the user terminal 10. Furthermore, the sensor 935 may include a global positioning system (GPS) sensor that receives a GPS signal to measure the latitude, longitude, and altitude of the device.

### <5. Conclusion>

As described above, according to an embodiment of the present disclosure, there is provided an information processing device including: an information acquisition unit that acquires an activation state of a service management application on a user terminal in a case where information indicating that card authentication corresponding to the user terminal has succeeded is acquired; and an information providing unit that provides the activation state to a service providing device that provides a service to the user terminal.

According to such a configuration, it is made possible to improve the flexibility of the system while securing the validity of a value and the validity of the user accessing the value. More specifically, according to an embodiment of the present disclosure, it is made possible to improve the flexibility of the system by separating the configuration used for card authentication and the configuration used for user authentication.

### <6. Modifications>

Preferred embodiments of the present disclosure have been described above in detail with reference to the accompanying drawings, but the technical scope of the present disclosure is not limited to these examples. It is apparent that a person having ordinary knowledge in the technical field of the present disclosure can arrive at various changes or modifications within the scope of the technical idea described in the claims, and it is naturally understood that these changes and modifications belong to the technical scope of the present disclosure.

The foregoing describes examples in which a service is provided in accordance with the activation state of the service management app. That is, the foregoing describes examples in which provided services differ depending on each activation state. However, executable processes in a service may differ depending on each activation state. For example, a top-up (deposit) to a value may not be executable unless the service management app is activated, while other processes may be executable even if the service management app is activated. Alternatively, any process in the service may be prevented from being executed unless the service management app is activated.

Furthermore, it is also possible to use a QR code (registered trademark) with an effective period as the card ID. In this case, the management server 30 generates a QR code (registered trademark) via the service management app activated by the user, and the user terminal 10 displays the QR code (registered trademark). Then, upon receiving the QR code (registered trademark) during a service inquiry, the management server 30 checks the activation state of the service management app on the user terminal 10 that has previously sent a request for the issuance, thereby reducing the possibility that an unauthorized user copies the QR code (registered trademark) to use the QR code (registered trademark).

Furthermore, for example, a program can be created such that the hardware built in a computer, such as a CPU, a ROM, and a RAM, is caused to fulfill functions equivalent to the functions of the control unit 140, the control unit 240, the control unit 340, and the control unit 440 described above. Furthermore, a computer-readable recording medium in which the program is recorded may also be provided.

Furthermore, the effects described herein are merely illustrative or exemplary and are not restrictive. That is, the technique according to the present disclosure can provide, in addition to or instead of the effects described above, other effects that are obvious to those skilled in the art from the descriptions herein.

Note that the following configurations also belong to the technical scope of the present disclosure.
(1) An information processing device including:
   an information acquisition unit that acquires, in a case where information indicating that card authentication corresponding to a user terminal has succeeded is acquired, an activation state of a service management application on the user terminal; and
   an information providing unit that provides the activation state to a service providing device that provides a service to the user terminal.
(2) The information processing device according to (1), in which
   the service management application is activated in a case where user authentication succeeds.
(3) The information processing device according to (1) or (2), in which
   the activation state includes at least one of a type of user authentication for activating the service management application or information indicating whether or not the service management application is activated.
(4) The information processing device according to (3), in which
   the information providing unit provides the activation state and the type of user authentication to the service providing device.
(5) The information processing device according to any one of (1) to (4), in which
   the information providing unit provides the activation state and position information regarding the user terminal to the service providing device.
(6) The information processing device according to any one of (1) to (5), in which
   the information providing unit provides the activation state and a device ID of the user terminal to the service providing device.
(7) The information processing device according to any one of (1) to (6), in which
   the information providing unit provides the activation state and a mode type of holding a card ID necessary for the card authentication to the service providing device.
(8) The information processing device according to any one of (1) to (7), in which
   the service in accordance with the activation state is provided to the user terminal by the service providing device.
(9) An information processing method including:
   acquiring, in a case where information indicating that card authentication corresponding to a user terminal has succeeded is acquired, an activation state of a service management application on the user terminal; and
   providing the activation state to a service providing device that provides a service to the user terminal by a processor.
(10) A user terminal including:
   a request acquisition unit that acquires, in a case where information indicating that card authentication corresponding to the user terminal has succeeded is acquired by an information processing device, a request for transmission of an activation state of a service management application from the information processing device; and
   a response providing unit that provides the activation state, as a response to the request for transmission, to the information processing device.
(11) An information processing method including:
   acquiring, in a case where information indicating that card authentication corresponding to a user terminal has succeeded is acquired by an information processing device, a request for transmission of an activation state of a service management application from the information processing device; and
   providing the activation state, as a response to the request for transmission, to the information processing device.
(12) A service providing device including:
   a state acquisition unit that acquires, in a case where information indicating that card authentication corresponding to a user terminal has succeeded is acquired by an information processing device, an activation state of a service management application on the user terminal from the information processing device; and
   a service providing unit that provides a service in accordance with the activation state to the user terminal.
(13) The service providing device according to (12), in which
   the service providing unit provides a first service to the user terminal in a case where the service management application is activated, and provides a second service to the user terminal in a case where the service management application is not activated, the second service being more limited than the first service.
(14) The service providing device according to (13), in which
   the first service is a service provided within a first credit line, and the second service is a service provided within a second credit line smaller than the first credit line.
(15) The service providing device according to (12), in which
   the service providing unit provides the service to the user terminal in a case where the service management application is activated, and prevents the service from being provided to the user terminal in a case where the service management application is not activated.
(16) The service providing device according to any one of (12) to (15), in which
   the service providing unit provides, in a case where the activation state and a mode type of holding a card ID necessary for the card authentication are acquired from the information processing device, the service in accordance with the activation state and the mode type of holding to the user terminal.
(17) The service providing device according to any one of (12) to (16), in which
   the service providing unit provides, in a case where the activation state and a type of user authentication for activating the service management application are acquired from the information processing device, the service in accordance with the activation state and the type of user authentication to the user terminal.
(18) The service providing device according to any one of (12) to (17), in which
   the service providing unit provides, in a case where the activation state and position information regarding the user terminal are acquired from the information processing device, the service in accordance with the activation state and the position information to the user terminal.
(19) The service providing device according to any one of (12) to (18), in which
   the service providing unit provides, in a case where the activation state and a device ID of the user terminal are acquired from the information processing device, the service in accordance with the activation state and the device ID to the user terminal.
(20) A service providing method including:
   acquiring, in a case where information indicating that card authentication corresponding to a user terminal has succeeded is acquired by an information processing device, an activation state of a service management application on the user terminal from the information processing device; and
   providing a service in accordance with the activation state to the user terminal by a processor.

### REFERENCE SIGNS LIST

- 1: Information processing system
- 10: User terminal
- 110: Input unit
- 130: Sensor unit
- 140: Control unit
- 141: Registration control unit
- 142: User authentication control unit
- 143: Request acquisition unit
- 144: Response providing unit
- 150: Storage unit
- 160: Communication unit
- 180: Output unit
- 20: Authentication server
- 240: Control unit
- 241: Card authentication unit
- 242: Attribute information transfer control unit
- 250: Storage unit
- 260: Communication unit
- 30: Management server (information processing device)
- 340: Control unit
- 341: Registration processing unit
- 342: Information acquisition unit
- 343: Information providing unit
- 350: Storage unit
- 360: Communication unit
- 40: Service providing server
- 41: Value
- 440: Control unit
- 441: State acquisition unit
- 442: Service providing unit
- 450: Storage unit
- 460: Communication unit
- 52: Card/tag
- 53: HCE server
- 60: Service management app
- 80: POS

## Claims

1. An information processing device comprising:
an information acquisition unit that acquires, in a case where information indicating that card authentication corresponding to a user terminal has succeeded is acquired, an activation state of a service management application on the user terminal; and
an information providing unit that provides the activation state to a service providing device that provides a service to the user terminal.

2. The information processing device according to claim 1, wherein
the service management application is activated in a case where user authentication succeeds.

3. The information processing device according to claim 1, wherein
the activation state includes at least one of a type of user authentication for activating the service management application or information indicating whether or not the service management application is activated.

4. The information processing device according to claim 3, wherein
the information providing unit provides the activation state and the type of user authentication to the service providing device.

5. The information processing device according to claim 1, wherein
the information providing unit provides the activation state and position information regarding the user terminal to the service providing device.

6. The information processing device according to claim 1, wherein
the information providing unit provides the activation state and a device ID of the user terminal to the service providing device.

7. The information processing device according to claim 1, wherein
the information providing unit provides the activation state and a mode type of holding a card ID necessary for the card authentication to the service providing device.

8. The information processing device according to claim 1, wherein
the service in accordance with the activation state is provided to the user terminal by the service providing device.

9. An information processing method comprising:
acquiring, in a case where information indicating that card authentication corresponding to a user terminal has succeeded is acquired, an activation state of a service management application on the user terminal; and
providing the activation state to a service providing device that provides a service to the user terminal by a processor.

10. A user terminal comprising:
a request acquisition unit that acquires, in a case where information indicating that card authentication corresponding to the user terminal has succeeded is acquired by an information processing device, a request for transmission of an activation state of a service management application from the information processing device; and
a response providing unit that provides the activation state, as a response to the request for transmission, to the information processing device.

11. An information processing method comprising:
acquiring, in a case where information indicating that card authentication corresponding to a user terminal has succeeded is acquired by an information processing device, a request for transmission of an activation state of a service management application from the information processing device; and
providing the activation state, as a response to the request for transmission, to the information processing device.

12. A service providing device comprising:
a state acquisition unit that acquires, in a case where information indicating that card authentication corresponding to a user terminal has succeeded is acquired by an information processing device, an activation state of a service management application on the user terminal from the information processing device; and
a service providing unit that provides a service in accordance with the activation state to the user terminal.

13. The service providing device according to claim 12, wherein
the service providing unit provides a first service to the user terminal in a case where the service management application is activated, and provides a second service to the user terminal in a case where the service management application is not activated, the second service being more limited than the first service.

14. The service providing device according to claim 13, wherein
the first service is a service provided within a first credit line, and the second service is a service provided within a second credit line smaller than the first credit line.

15. The service providing device according to claim 12, wherein
the service providing unit provides the service to the user terminal in a case where the service management application is activated, and prevents the service from being provided to the user terminal in a case where the service management application is not activated.

16. The service providing device according to claim 12, wherein
the service providing unit provides, in a case where the activation state and a mode type of holding a card ID necessary for the card authentication are acquired from the information processing device, the service in accordance with the activation state and the mode type of holding to the user terminal.

17. The service providing device according to claim 12, wherein
the service providing unit provides, in a case where the activation state and a type of user authentication for activating the service management application are acquired from the information processing device, the service in accordance with the activation state and the type of user authentication to the user terminal.

18. The service providing device according to claim 12, wherein
the service providing unit provides, in a case where the activation state and position information regarding the user terminal are acquired from the information processing device, the service in accordance with the activation state and the position information to the user terminal.

19. The service providing device according to claim 12, wherein
the service providing unit provides, in a case where the activation state and a device ID of the user terminal are acquired from the information processing device, the service in accordance with the activation state and the device ID to the user terminal.

20. A service providing method comprising:
acquiring, in a case where information indicating that card authentication corresponding to a user terminal has succeeded is acquired by an information processing device, an activation state of a service management application on the user terminal from the information processing device; and
providing a service in accordance with the activation state to the user terminal by a processor.
